# EUROPÄISCHE PATENTSCHRIFT

(11) **EP 3 659 161 B1**
(45) Veröffentlichungstag und Bekanntmachung des Hinweises auf die Patenterteilung: **18.03.2026**
(21) Anmeldenummer: 18769045.8
(22) Anmeldetag: 23.08.2018
(51) Int. Cl.: H01H 3/30, F16H 33/02, H01H 33/40

(54) **SPANNGETRIEBE ZUM SPANNEN EINER SPEICHERFEDER EINES FEDERSPEICHERANTRIEBS**
TENSIONING MECHANISM FOR CLAMPING A PRE-LOADED SPRING OF A SPRING-LOADED ACCUMULATOR DRIVE
ENTRAÎNEMENT D'EMBRAYAGE POUR CHARGER UN RESSORT DE MÉMOIRE D'UN ENTRAÎNEMENT À RESSORT ACUMMULATEUR

(30) Priorität: 22.09.2017 DE 102017216804
(43) Veröffentlichungstag der Anmeldung: 03.06.2020
(73) Patentinhaber: Siemens Energy Global GmbH & Co. KG, 81739 München (DE)
(72) Erfinder: LÖBNER, Friedrich, 10245 Berlin (DE)
(86) Internationale Anmeldenummer: PCT/EP2018/072707
(87) Internationale Veröffentlichungsnummer: WO 2019/057433

(56) Entgegenhaltungen:
- CN-U- 201 956 270
- DE-A1- 102014 224 405
- DE-A1- 19 642 031
- US-A1- 2016 240 330

## Beschreibung

Die Erfindung betrifft ein Spanngetriebe zum Spannen einer Speicherfeder eines Federspeicherantriebs, insbesondere für einen Leistungsschalter.

Federspeicherantriebe werden insbesondere als Antriebe zum Schalten von Leistungsschaltern verwendet. Leistungsschalter sind elektrische Schalter, die für hohe elektrische Ströme und Spannungen ausgelegt sind, um insbesondere hohe Überlastströme und Kurzschlussströme sicher abschalten zu können. Dazu weisen Leistungsschalter eine Unterbrechereinheit mit wenigstens einem bewegbaren Schaltelement zum Öffnen und Schließen eines Strompfads auf. Zum Bewegen der Schaltelemente bei einem Schaltvorgang halten Leistungsschalter eine für den Schaltvorgang benötigte Energie bereit. Federspeicherantriebe speichern diese Energie in Speicherfedern, die zur Speicherung der Energie gespannt werden. Eine Speicherfeder wird beispielsweise mit einem Spannmotor gespannt, der über ein Spanngetriebe mit der Speicherfeder verbunden ist. Analog werden Federspeicherantriebe auch beispielsweise als Antriebe zum Schalten von Lasttrennschaltern verwendet. Aus der DE 196 42 031 A1 ist eine Betätigungseinrichtung eines Trennschalters bekannt. Aus der US 2016/240330 A1 ist ein Kupplungsmechanismus eines Antriebs eines Leistungsschalters bekannt. Aus der CN 201 956 270 U ist ein Schaltgetriebe für eine Vakuumschaltröhre bekannt.

Der Erfindung liegt die Aufgabe zugrunde, ein verbessertes Spanngetriebe zum Spannen einer Speicherfeder eines Federspeicherantriebs anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßes Spanngetriebe zum Spannen einer Speicherfeder eines Federspeicherantriebs umfasst ein an die Speicherfeder gekoppeltes Spannrad, eine an das Spannrad gekoppelte Zwischenwelle, ein von einem Spannmotor antreibbares Zwischenrad, einen an das Zwischenrad gekoppelten Freilauf, einen Arretierungsmechanismus zum lösbaren Arretieren des Spannrads in einem gespannten Zustand der Speicherfeder und eine Klauenkupplung, die den Freilauf zum Spannen der Speicherfeder an die Zwischenwelle koppelt und in dem gespannten Zustand der Speicherfeder von der Zwischenwelle entkoppelt.

Die Zwischenwelle überträgt beim Spannen der Speicherfeder Drehungen des Zwischenrads über den Freilauf und die Klauenkupplung auf das Spannrad und ermöglicht dadurch das Spannen der Speicherfeder durch den Spannmotor, der direkt oder indirekt das Zwischenrad antreibt. Durch den Arretierungsmechanismus ist das Spannrad in dem gespannten Zustand der Speicherfeder arretierbar, so dass die Speicherfeder gespannt bleibt bis die Arretierung zur Freigabe der von der Speicherfeder gespeicherten Energie gelöst wird. Die Klauenkupplung entkoppelt in dem gespannten Zustand der Speicherfeder die Zwischenwelle von dem Freilauf und dem Zwischenrad, so dass durch das Zwischenrad, insbesondere beim Nachlaufen des Spannmotors, keine Kräfte auf die Zwischenwelle und das Spannrad übertragen werden. Ohne die Klauenkupplung würden diese Kräfte in dem gespannten Zustand der Speicherfeder auf die Zwischenwelle und an die Zwischenwelle gekoppelte Komponenten des Spanngetriebes wie Komponenten des Arretierungsmechanismus übertragen werden und diese verspannen und belasten. Die Klauenkupplung entlastet daher vorteilhaft die Zwischenwelle und an sie gekoppelte Komponenten des Spanngetriebes in dem gespannten Zustand der Speicherfeder.

Die Erfindung sieht vor, dass die Klauenkupplung eine drehfest an die Zwischenwelle gekoppelte erste Kupplungsbacke und eine mit dem Freilauf verbundene zweite Kupplungsbacke aufweist, wobei die erste Kupplungsbacke zwischen einer ersten Endstellung, in der sie an der zweiten Kupplungsbacke anliegt, und einer zweiten Endstellung, in der sie von der zweiten Kupplungsbacke getrennt ist und die sie im gespannten Zustand der Speicherfeder annimmt, verschiebbar ist. Durch die drehfeste Kopplung der ersten Kupplungsbacke an die Zwischenwelle werden Drehungen der Zwischenwelle auf die erste Kupplungsbacke übertragen. Die Verschiebbarkeit der ersten Kupplungsbacke ermöglicht deren Kopplung an die zweite Kupplungsbacke und den mit dieser verbundenen Freilauf zum Spannen der Speicherfeder und die Entkopplung der Kupplungsbacken im gespannten Zustand der Speicherfeder.

Die erste Kupplungsbacke ist durch ein Koppelelement an die Zwischenwelle gekoppelt, wobei das Koppelelement durch eine senkrecht zu einer Längsachse der Zwischenwelle verlaufende Queröffnung in der Zwischenwelle geführt ist und in der Queröffnung zwischen einer die erste Endstellung der ersten Kupplungsbacke definierenden ersten Position und einer die zweite Endstellung der ersten Kupplungsbacke definierenden zweiten Position verschiebbar ist. Das Koppelelement ist beispielsweise als ein Rohr oder Bolzen ausgebildet, dessen Längsachse senkrecht zur Längsachse der Zwischenwelle angeordnet ist und dessen Enden in Ausnehmungen in der ersten Kupplungsbacke hineinragen. Das Koppelelement ermöglicht ein Verschieben der ersten Kupplungsbacke durch ein Verschieben des Koppelelements.

Ferner ist beispielsweise ein Schaltstift vorgesehen, der in einer entlang der Längsachse der Zwischenwelle verlaufenden Längsöffnung in der Zwischenwelle verschiebbar gelagert und an das Koppelelement gekoppelt ist. Dadurch kann die erste Kupplungsbacke über das Koppelement durch Verschieben des Schaltstifts zwischen ihren Endstellungen verschoben werden.

Ferner ist beispielsweise vorgesehen, dass ein Absteuerende des Schaltstiftes aus der Längsöffnung in der Zwischenwelle herausragt und an dem Spannrad ein Absteuerelement angeordnet ist, das das Absteuerende des Schaltstifts im gespannten Zustand der Speicherfeder zu der Längsöffnung hin verschiebt, so dass das Koppelelement von seiner ersten in seine zweite Position verschoben wird. Beispielsweise weist das Absteuerelement ein radial von dem Spannrad abstehendes Kontaktende mit einer schrägen Kontaktfläche auf, die beim Verschieben des Schaltstifts an dessen Absteuerende anliegt. Durch das Absteuerelement wird das Spannrad in einer Stellung, in der die Speicherfeder gespannt ist, an den Schaltstift gekoppelt, wobei das Absteuerelement den Schaltstift verschiebt und dadurch die Klauenkupplung öffnet.

Vorzugsweise verläuft jede der beiden Kupplungsbacken ringförmig um die Zwischenwelle herum. Dadurch wird in einfacher Weise eine zuverlässige Kopplung der Klauenkupplung an die Zwischenwelle und den Freilauf ermöglicht.

Ferner ist beispielsweise eine an die erste Kupplungsbacke gekoppelte Rückstellfeder vorgesehen, die in der zweiten Endstellung der ersten Kupplungsbacke eine Federkraft in Richtung der ersten Endstellung auf die erste Kupplungsbacke ausübt. Durch die Rückstellfeder kann die erste Kupplungsbacke von ihrer zweiten Endstellung in die erste Endstellung geschoben werden, wenn das Absteuerelement beim Entspannen der Speicherfeder den Schaltstift freigibt. Dadurch wird die Klauenkupplung wieder geschlossen und das Spanngetriebe ist nach dem Entspannen der Speicherfeder zum erneuten Spannen der Speicherfeder bereit.

Der Freilauf weist beispielsweise einen um die Zwischenwelle herum verlaufenden Freilaufring auf, mit dem die zweite Kupplungsbacke verbunden ist. Dadurch wird eine zuverlässige Kopplung der Klauenkupplung an den Freilauf ermöglicht.

Das Zwischenrad ist beispielsweise über ein Kegelradgetriebe durch den Spannmotor antreibbar. Dadurch wird eine Umlenkung der Antriebskraft des Spannmotors erreicht, die eine kompakte Bauform des Federspeicherantriebs ermöglicht.

Der Arretierungsmechanismus weist beispielsweise eine fest mit dem Spannrad verbundene Kurvenscheibenrolle und eine Einklinke, die die Kurvenscheibenrolle zum Arretieren des Spannrads fixiert, auf. Dies ermöglicht ein zuverlässiges lösbares Arretieren des Spannrads durch einen einfachen und kostengünstigen Arretierungsmechanismus.

Ein erfindungsgemäßer Federspeicherantrieb weist ein erfindungsgemäßes Spanngetriebe auf. Die Vorteile eines derartigen Federspeicherantriebs ergeben sich aus den oben genannten Vorteilen eines erfindungsgemäßen Spanngetriebes.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische und teilweise geschnittene Darstellung eines Spanngetriebes, und
- FIG 2: einen vergrößerten Ausschnitt der Figur 1.

Einander entsprechende Teile sind in den Figuren mit denselben Bezugszeichen versehen.

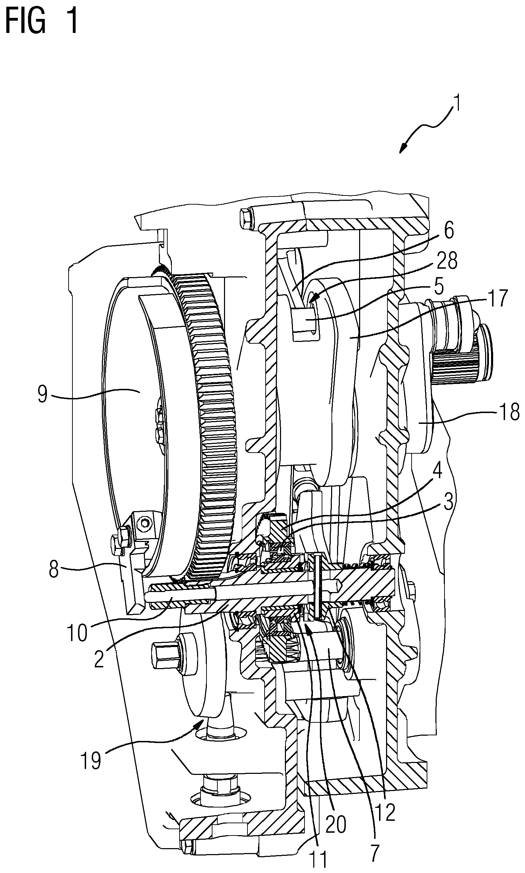

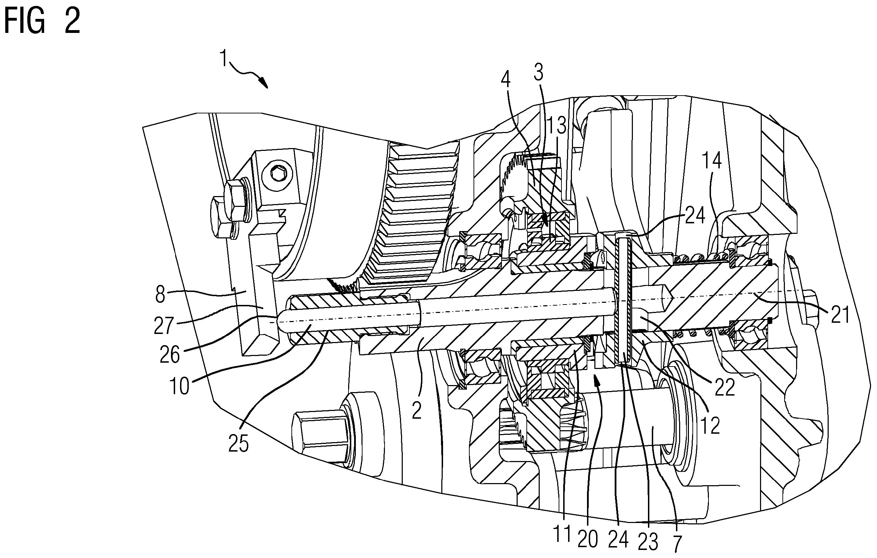

Die Figuren 1 und 2 zeigen ein Spanngetriebe 1 zum Spannen einer (nicht dargestellten) Speicherfeder eines Federspeicherantriebs in einer perspektivischen und teilweise geschnittenen Darstellung, wobei Figur 2 einen vergrößerten Ausschnitt der Figur 1 zeigt. Die Speicherfeder ist beispielsweise eine Einschaltfeder des Federspeicherantriebs, die Energie zum Schließen eines Strompfads eines Leistungsschalters speichert. Das Spanngetriebe 1 umfasst unter anderem ein Spannrad 9, eine Zwischenwelle 2 und ein Zwischenrad 4.

Das Spannrad 9 ist fest mit einer Kurvenscheibe 17 und einer Spannwelle 18 verbunden und über die Spannwelle 18 an die Speicherfeder gekoppelt.

Das Zwischenrad 4 ist über ein Kegelradgetriebe 19 von einem (nicht dargestellten) Spannmotor antreibbar.

Die Zwischenwelle 2 ist an das Spannrad 9 und das Zwischenrad 4 gekoppelt, um zum Spannen der Speicherfeder Drehungen des Zwischenrads 4 auf das Spannrad 9 zu übertragen. Die Kopplung zwischen der Zwischenwelle 2 und dem Spannrad 9 ist eine Zahnradkopplung, die von einem Zahnkranz des Spannrads 9 und einem dazu korrespondierenden Zahnradring der Zwischenwelle 2 gebildet wird.

Das Zwischenrad 4 ist über einen Freilauf 3 und eine Klauenkupplung 20 an die Zwischenwelle 2 gekoppelt, wobei der Freilauf 3 das Zwischenrad 4 mit der Klauenkupplung 20 verbindet. Die Klauenkupplung 20 weist eine drehfest an die Zwischenwelle 2 gekoppelte erste Kupplungsbacke 12 und eine mit einem Freilaufinnenring 13 des Freilaufs 3 verbundene zweite Kupplungsbacke 11 auf. Beide Kupplungsbacken 11, 12 verlaufen ringförmig um die Zwischenwelle 2.

Die erste Kupplungsbacke 12 ist zwischen einer ersten Endstellung, in der sie an der zweiten Kupplungsbacke 11 anliegt und die sie beim Spannen der Speicherfeder annimmt, und einer zweiten Endstellung, in der sie von der zweiten Kupplungsbacke 11 getrennt ist und die sie in einem gespannten Zustand der Speicherfeder annimmt, axial, das heißt parallel zu einer Längsachse 21 der Zwischenwelle 2, verschiebbar. Dadurch koppelt die Klauenkupplung 20 den Freilauf 3 und das Zwischenrad 4 zum Spannen der Speicherfeder an die Zwischenwelle 2 und entkoppelt den Freilauf 3 und das Zwischenrad 4 in dem gespannten Zustand der Speicherfeder von der Zwischenwelle 2.

Der Freilauf 3 entkoppelt das Zwischenrad 4 von der Zwischenwelle 2 beim Spannen der Speicherfeder, wenn die Spannwelle 18 über einen oberen Totpunkt läuft.

Um die erste Kupplungsbacke 12 drehfest und axial verschiebbar an die Zwischenwelle 2 zu koppeln, weisen die erste Kupplungsbacke 12 und die Zwischenwelle 2 beispielsweise eine Verzahnung auf.

Um die erste Kupplungsbacke 12 von ihrer ersten Endstellung in die zweite Endstellung zu verschieben, weist die Zwischenwelle 2 im Bereich der ersten Kupplungsbacke 12 eine langlochartige Queröffnung 22 auf, die senkrecht zu der Längsachse 21 durch die Zwischenwelle 2 verläuft. Durch die Queröffnung 22 ist ein mit der ersten Kupplungsbacke 12 verbundenes Koppelement 23 geführt, das in der Queröffnung 22 zwischen einer die erste Endstellung der ersten Kupplungsbacke 12 definierenden ersten Position und einer die zweite Endstellung der ersten Kupplungsbacke 12 definierenden zweiten Position verschiebbar ist. In dem in den Figuren dargestellten Ausführungsbeispiel ist das Koppelement 23 als ein Rohr ausgebildet, dessen Enden in Ausnehmungen 24 in der ersten Kupplungsbacke 12 hineinragen. Alternativ kann das Koppelement 23 aber auch beispielsweise als ein Bolzen ausgeführt sein.

Ferner weist die Zwischenwelle 2 eine entlang ihrer Längsachse 21 verlaufende Längsöffnung 25 auf, die sich von der Queröffnung 22 zu einem spannradseitigen Ende der Zwischenwelle 2 erstreckt. In der Längsöffnung 25 ist ein Schaltstift 10 axial verschiebbar gelagert, der ein aus der Längsöffnung 25 heraus ragendes Absteuerende 26 aufweist und sich in der Längsöffnung 25 bis zu dem Koppelement 23 erstreckt.

An dem Spannrad 9 ist ein Absteuerelement 8 angeordnet, das das Absteuerende 26 des Schaltstifts 10 im gespannten Zustand der Speicherfeder zu der Längsöffnung 25 hin verschiebt, so dass das Koppelelement 23 von seiner ersten in seine zweite Position verschoben wird. Das Absteuerelement 8 weist ein radial von dem Spannrad 9 abstehendes Kontaktende mit einer schrägen Kontaktfläche 27 auf, die beim Verschieben des Schaltstifts 10 an dessen Absteuerende 26 anliegt. Das Absteuerelement 8 ist beispielsweise an einer Position an dem Spannrad 9 angeordnet, in der die Kontaktfläche 27 das Absteuerende 26 des Schaltstifts 10 kontaktiert, wenn sich das Spannrad 9 etwa drei Grad weitergedreht hat, nachdem die Spannwelle 18 den oberen Totpunkt erreicht hat.

An die erste Kupplungsbacke 12 ist ferner eine Rückstellfeder 14 gekoppelt, die spiralartig um die Zwischenwelle 2 herum verläuft. Die Rückstellfeder 14 greift an einem von der zweiten Kupplungsbacke 11 abgewandten Ende der ersten Kupplungsbacke 12 an und übt in der zweiten Endstellung der ersten Kupplungsbacke 12 eine Federkraft in Richtung der ersten Endstellung auf die erste Kupplungsbacke 12 aus.

Das Spanngetriebe 1 weist außerdem einen Arretierungsmechanismus 28 zum lösbaren Arretieren des Spannrads 9 in dem gespannten Zustand der Speicherfeder auf. Der Arretierungsmechanismus 28 des in den Figuren gezeigten Ausführungsbeispiels weist eine an der Kurvenscheibe 17 angeordnete Kurvenscheibenrolle 5 und eine Einklinke 6, die die Kurvenscheibenrolle 5 zum Arretieren des Spannrads 9 fixiert, auf. Nach dem Trennen der Kupplungsbacken 11, 12 läuft die Kurvenscheibenrolle 5 gegen die Einklinke 6 und wird von der Einklinke 6 in dieser Position arretiert, beispielsweise wenn sich das Spannrad 9 etwa zehn Grad weitergedreht hat, nachdem die Spannwelle 18 den oberen Totpunkt erreicht hat. Dabei wird ein Abprallen der Kurvenscheibenrolle 5 von der Einklinke 6 durch den Freilauf 3 und eine Rücklaufsperre auf einer an das Zwischenrad 4 gekoppelten Zusatzwelle 7 verhindert.

Da die Kupplungsbacken 11, 12 im gespannten Zustand der Speicherfeder voneinander getrennt sind, werden die Zwischenwelle 2 und an sie gekoppelte Komponenten wie die Einklinke 6 und die Kurvenscheibenrolle 5 im gespannten Zustand der Speicherfeder von dem Zwischenrad 4 entkoppelt und nicht durch das Zwischenrad 4, beispielsweise bei einem Nachlaufen des Spannmotors, belastet und verspannt. Dadurch werden vorteilhaft insbesondere die Belastung der Einklinke 6, der Kurvenscheibenrolle 5 und des Freilaufs 3 reduziert und eine Abnutzung oder Schädigung dieser Komponenten des Spanngetriebes 1 durch diese Belastung verhindert.

Zur Freigabe der in der gespannten Speicherfeder gespeicherten Energie wird die Kopplung der Einklinke 6 an die Kurvenscheibenrolle 5 gelöst. Die sich entspannende Speicherfeder dreht das Spannrad 9 in derselben Drehrichtung wie beim Spannen der Speicherfeder, wodurch das Absteuerelement 8 den Schaltstift 10 wieder freigibt und die erste Kupplungsbacke 12 durch die Rückstellfeder 14 von der zweiten Endstellung in die erste Endstellung geschoben wird, so dass die Klauenkupplung 20 wieder geschlossen wird. Dadurch ist das Spanngetriebe 1 zum erneuten Spannen der Speicherfeder bereit.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus im Rahmen des Schutzumfangs der Ansprüche abgeleitet werden.

## Patentansprüche

1. Spanngetriebe (1) zum Spannen einer Speicherfeder eines Federspeicherantriebs, das Spanngetriebe (1) umfassend
- ein an die Speicherfeder gekoppeltes Spannrad (9),
- eine an das Spannrad (9) gekoppelte Zwischenwelle (2),
- ein von einem Spannmotor antreibbares Zwischenrad (4),
- einen an das Zwischenrad (4) gekoppelten Freilauf (3),
- einen Arretierungsmechanismus (28) zum lösbaren Arretieren des Spannrads (9) in einem gespannten Zustand der Speicherfeder, und
- eine Klauenkupplung (20), die den Freilauf (3) zum Spannen der Speicherfeder an die Zwischenwelle (2) koppelt und in dem gespannten Zustand der Speicherfeder von der Zwischenwelle (2) entkoppelt, so dass die Klauenkupplung die Zwischenwelle und an sie gekoppelte Komponenten des Spanngetriebes in dem gespannten Zustand der Speicherfeder entlastet,
**dadurch gekennzeichnet, dass**
die Klauenkupplung (20) eine drehfest an die Zwischenwelle (2) gekoppelte erste Kupplungsbacke (12) und eine mit dem Freilauf (3) verbundene zweite Kupplungsbacke (11) aufweist, wobei die erste Kupplungsbacke (12) zwischen einer ersten Endstellung, in der sie an der zweiten Kupplungsbacke (11) anliegt, und einer zweiten Endstellung, in der sie von der zweiten Kupplungsbacke (11) getrennt ist und die sie im gespannten Zustand der Speicherfeder annimmt, verschiebbar ist, und die erste Kupplungsbacke (12) durch ein Koppelelement (23) an die Zwischenwelle (2) gekoppelt ist, wobei das Koppelelement (23) durch eine senkrecht zu einer Längsachse (21) der Zwischenwelle (2) verlaufende Queröffnung (22) in der Zwischenwelle (2) geführt ist und in der Queröffnung (22) zwischen einer die erste Endstellung der ersten Kupplungsbacke (12) definierenden ersten Position und einer die zweite Endstellung der ersten Kupplungsbacke (12) definierenden zweiten Position parallel zu der Längsachse (21) der Zwischenwelle (2) verschiebbar ist.

2. Spanngetriebe (1) nach Anspruch 1,
**dadurch gekennzeichnet, dass**
das Koppelelement (23) als ein Rohr oder Bolzen ausgebildet ist, dessen Längsachse senkrecht zur Längsachse (21) der Zwischenwelle (2) angeordnet ist und dessen Enden in Ausnehmungen (24) in der ersten Kupplungsbacke (12) hineinragen.

3. Spanngetriebe (1) nach Anspruch 1 oder 2,
**gekennzeichnet durch**
einen Schaltstift (10), der in einer entlang der Längsachse (21) der Zwischenwelle (2) verlaufenden Längsöffnung (25) in der Zwischenwelle (2) verschiebbar gelagert und an das Koppelelement (23) gekoppelt ist.

4. Spanngetriebe (1) nach Anspruch 3,
**dadurch gekennzeichnet, dass**
ein Absteuerende (26) des Schaltstifts (10) aus der Längsöffnung (25) heraus ragt und an dem Spannrad (9) ein Absteuerelement (8) angeordnet ist, das das Absteuerende (26) des Schaltstifts (10) im gespannten Zustand der Speicherfeder zu der Längsöffnung (25) hin verschiebt, so dass das Koppelelement (23) von seiner ersten in seine zweite Position verschoben wird.

5. Spanngetriebe (1) nach Anspruch 4,
**dadurch gekennzeichnet, dass**
das Absteuerelement (8) ein radial von dem Spannrad (9) abstehendes Kontaktende mit einer schrägen Kontaktfläche (27) aufweist, die beim Verschieben des Schaltstifts (10) an dessen Absteuerende (26) anliegt.

6. Spanngetriebe (1) nach einem der Ansprüche 1 bis 5,
**dadurch gekennzeichnet, dass**
die beiden Kupplungsbacken (11, 12) jeweils ringförmig um die Zwischenwelle (2) herum verlaufen.

7. Spanngetriebe (1) nach einem der Ansprüche 1 bis 6,
**gekennzeichnet durch**
eine an die erste Kupplungsbacke (12) gekoppelte Rückstellfeder (14), die in der zweiten Endstellung der ersten Kupplungsbacke (12) eine Federkraft in Richtung der ersten Endstellung auf die erste Kupplungsbacke (12) ausübt.

8. Spanngetriebe (1) nach einem der Ansprüche 1 bis 7,
**dadurch gekennzeichnet, dass**
der Freilauf (3) einen um die Zwischenwelle (2) herum verlaufenden Freilaufring (13) aufweist und die zweite Kupplungsbacke (11) mit dem Freilaufring (13) verbunden ist.

9. Spanngetriebe (1) nach einem der vorhergehenden Ansprüche, **dadurch gekennzeichnet, dass**
das Zwischenrad (4) über ein Kegelradgetriebe (19) durch den Spannmotor antreibbar ist.

10. Spanngetriebe (1) nach einem der vorhergehenden Ansprüche,
**dadurch gekennzeichnet, dass**
der Arretierungsmechanismus (28) eine fest mit dem Spannrad (9) verbundene Kurvenscheibenrolle (5) und eine Einklinke (6), die die Kurvenscheibenrolle (5) zum Arretieren des Spannrads (9) fixiert, aufweist.

11. Federspeicherantrieb mit einem gemäß einem der vorhergehenden Ansprüche ausgebildeten Spanngetriebe (1).

## Claims

1. A tensioning mechanism (1) for clamping a pre-loaded spring of a spring-loaded accumulator drive, the tensioning mechanism (1) comprising
- tensioning wheel (9) coupled to the pre-loaded spring,
- an intermediate shaft (2) coupled to the tensioning wheel (9),
- an intermediate wheel (4) drivable by a tensioning motor,
- a freewheel (3) coupled to the intermediate wheel (4),
- a locking mechanism (28) for releasably locking the tensioning wheel (9) in a tensioned state of the pre-loaded spring, and
- a claw coupling (20) which couples the freewheel (3) to the intermediate shaft (2) for clamping the pre-loaded spring and decouples it from the intermediate shaft (2) in the tensioned state of the pre-loaded spring, such that the claw coupling relieves the intermediate shaft and components of the tensioning mechanism coupled thereto in the tensioned state of the pre-loaded spring, **characterized in that**
the claw coupling (20) has a first coupling jaw (12) non-rotatably coupled to the intermediate shaft (2) and a second coupling jaw (11) connected to the freewheel (3), wherein the first coupling jaw (12) is displaceable between a first end position, in which it abuts the second coupling jaw (11), and a second end position, in which it is separated from the second coupling jaw (11) and which it assumes in the tensioned state of the pre-loaded spring, and the first coupling jaw (12) is coupled to the intermediate shaft (2) by a coupling element (23), wherein the coupling element (23) is routed through a transverse opening (22) in the intermediate shaft (2) extending perpendicularly to a longitudinal axis (21) of the intermediate shaft (2) and is displaceable in the transverse opening (22) between a first position defining the first end position of the first coupling jaw (12) and a second position defining the second end position of the first coupling jaw (12) parallel to the longitudinal axis (21) of the intermediate shaft (2).

2. The tensioning mechanism (1) according to claim 1,
**characterised in that**
the coupling element (23) is designed as a tube or bolt, the longitudinal axis of which is arranged perpendicularly to the longitudinal axis (21) of the intermediate shaft (2) and the ends of which project into recesses (24) in the first coupling jaw (12).

3. The tensioning mechanism (1) according to claim 1 or 2,
**characterised by**
an actuating pin (10) which is displaceably mounted in a longitudinal opening (25) in the intermediate shaft (2) extending along the longitudinal axis (21) of the intermediate shaft (2) and is coupled to the coupling element (23).

4. The tensioning mechanism (1) according to claim 3,
**characterised in that**
a reset end (26) of the actuating pin (10) projects from the longitudinal opening (25), and a reset element (8) is arranged on the tensioning wheel (9) which displaces the reset end (26) of the actuating pin (10) toward the longitudinal opening (25) in the tensioned state of the pre-loaded spring, such that the coupling element (23) is displaced from its first to its second position.

5. The tensioning mechanism (1) according to claim 4,
**characterised in that**
the reset element (8) has a contact end projecting radially from the tensioning wheel (9) and having an oblique contact surface (27) which abuts the reset end (26) of the actuating pin (10) upon displacing the same.

6. The tensioning mechanism (1) according to any one of claims 1 to 5, **characterised in that**
the two coupling jaws (11, 12) each extend annularly around the intermediate shaft (2).

7. The tensioning mechanism (1) according to any one of claims 1 to 6,
**characterised by**
a return spring (14) coupled to the first coupling jaw (12), which, in the second end position of the first coupling jaw (12), applies a spring force on the first coupling jaw (12) in the direction of the first end position.

8. The tensioning mechanism (1) according to any one of claims 1 to 7,
**characterised in that**
the freewheel (3) has a freewheel ring (13) extending around the intermediate shaft (2), and the second coupling jaw (11) is connected to the freewheel ring (13).

9. The tensioning mechanism (1) according to any one of the preceding claims, **characterised in that**
the intermediate wheel (4) is drivable by the tensioning motor via a bevel gear (19).

10. The tensioning mechanism (1) according to any one of the preceding claims,
**characterised in that**
the locking mechanism (28) has a cam disc roller (5) fixedly connected to the tensioning wheel (9) and a latch (6) fixing the cam disc roller (5) for locking the tensioning wheel (9).

11. A spring-loaded accumulator drive having a tensioning mechanism (1) designed according to any one of the preceding claims.

## Revendications

1. Entraînement d'embrayage (1) pour charger un ressort de mémoire d'un entraînement à ressort accumulateur, l'entraînement d'embrayage (1) comprenant
- une roue de tension (9) accouplée au ressort de mémoire,
- arbre intermédiaire (2) accouplé à la roue de tension (9),
- une roue intermédiaire (4) pouvant être entraînée par un moteur de tension,
- une roue libre (3) accouplée à la roue intermédiaire (4),
- un mécanisme d'arrêt (28) pour l'arrêt amovible de la roue de tension (9) dans un état tendu du ressort de mémoire, et
- un embrayage à griffes (20) qui accouple la roue libre (3) à l'arbre intermédiaire (2) pour tendre le ressort de mémoire et le désaccouple de l'arbre intermédiaire (2) dans l'état tendu du ressort de mémoire, de sorte que l'embrayage à griffes décharge l'arbre intermédiaire et les composants de l'entraînement d'embrayage qui y sont accouplés dans l'état tendu du ressort de mémoire, **caractérisé en ce que**
l'embrayage à griffes (20) présentant une première mâchoire d'embrayage (12) couplée de manière résistante à la torsion à l'arbre intermédiaire (2) et une deuxième mâchoire d'embrayage (11) reliée à la roue libre (3), la première mâchoire d'embrayage (12) étant déplaçable entre une première position finale, dans laquelle elle est en appui sur la deuxième mâchoire d'embrayage (11), et une deuxième position finale, dans laquelle elle est séparée de la deuxième mâchoire d'embrayage (11) et qu'elle adopte dans l'état tendu du ressort de mémoire, et la première mâchoire d'embrayage (12) étant couplée à l'arbre intermédiaire (2) par un élément de couplage (23), l'élément de couplage (23) étant guidé à travers une ouverture transversale (22) dans l'arbre intermédiaire (2) s'étendant perpendiculairement à un axe longitudinal (21) de l'arbre intermédiaire (2) et étant déplaçable dans l'ouverture transversale (22) parallèlement à l'axe longitudinal (21) de l'arbre intermédiaire (2) entre une première position définissant la première position finale de la première mâchoire d'embrayage (12) et une deuxième position définissant la deuxième position finale de la première mâchoire d'embrayage (12).

2. Entraînement d'embrayage (1) selon la revendication 1,
**caractérisé en ce que**
l'élément de couplage (23) étant conçu comme un tube ou un boulon, dont l'axe longitudinal est disposé perpendiculairement à l'axe longitudinal (21) de l'arbre intermédiaire (2) et dont les extrémités pénètrent dans des évidements (24) dans la première mâchoire d'embrayage (12).

3. Entraînement d'embrayage (1) selon la revendication 1 ou 2, **caractérisé par**
une tige de commutation (10), qui est montée de manière coulissante dans une ouverture longitudinale (25) s'étendant le long de l'axe longitudinal (21) de l'arbre intermédiaire (2) dans l'arbre intermédiaire (2) et est couplée à l'élément de couplage (23).

4. Entraînement d'embrayage (1) selon la revendication 3,
**caractérisé en ce que**
une extrémité de commande (26) de la tige de commutation (10) faisant saillie hors de l'ouverture longitudinale (25) et élément de commande (8) étant disposé sur la roue de tension (9), lequel élément de commande déplace l'extrémité de commande (26) de la tige de commutation (10) vers l'ouverture longitudinale (25) dans l'état tendu du ressort de mémoire, de sorte que l'élément de couplage (23) est déplacé de sa première à sa deuxième position.

5. Entraînement d'embrayage (1) selon la revendication 4,
**caractérisé en ce que**
l'élément de commande (8) présentant une extrémité de contact faisant saillie radialement de la roue de tension (9) et dotée d'une surface de contact oblique (27) qui, lors du déplacement de la tige de commutation (10), est en appui sur son extrémité de commande (26).

6. Entraînement d'embrayage (1) selon l'une quelconque des revendications 1 à 5, **caractérisé en ce que**
les deux mâchoires d'embrayage (11, 12) s'étendant chacune de manière annulaire autour de l'arbre intermédiaire (2).

7. Entraînement d'embrayage (1) selon l'une quelconque des revendications 1 à 6,
**caractérisé par**
un ressort de rappel (14) accouplé à la première mâchoire d'embrayage (12), qui exerce une force de ressort sur la première mâchoire d'embrayage (12) en direction de la première position finale dans la deuxième position finale de la première mâchoire d'embrayage (12).

8. Entraînement d'embrayage (1) selon l'une quelconque des revendications 1 à 7,
**caractérisé en ce que**
la roue libre (3) présentant un anneau de roue libre (13) s'étendant autour de l'arbre intermédiaire (2), et la deuxième mâchoire d'embrayage (11) étant reliée à l'anneau de roue libre (13).

9. Entraînement d'embrayage (1) selon l'une quelconque des revendications précédentes, **caractérisé en ce que** l'engrenage intermédiaire (4) peut être entraîné par le moteur de tension via un engrenage conique (19).

10. Entraînement d'embrayage (1) selon l'une quelconque des revendications précédentes,
**caractérisé en ce que**
le mécanisme d'arrêt (28) présentant un galet de came (5) fixé solidement à la roue de tension (9) et un cliquet d'encliquetage (6) qui fixe le galet de came (5) pour arrêter la roue de tension (9).

11. Entraînement à ressort accumulateur comprenant un entraînement d'embrayage (1) conçu selon l'une quelconque des revendications précédentes.
